# FASCICULE DE BREVET EUROPEEN

(11) **EP 2 239 802 B1**
(45) Date de publication et mention de la délivrance du brevet: **02.07.2014**
(21) Numéro de dépôt: 10157895.3
(22) Date de dépôt: 26.03.2010
(51) Int. Cl.: H01M 2/26, H01M 2/28

(54) **Accumulateur et procede de fabrication**
Batterie und Hestellungsverfahren
Battery and manufacturing method

(30) Priorité: 07.04.2009 FR 0901693
(43) Date de publication de la demande: 13.10.2010
(73) Titulaire: Saft Groupe S.A., 93170 Bagnolet (FR)
(72) Inventeur: Lanne-Touyague, François, 33000, BORDEAUX (FR); Gilabert, Claude, 33290, LE PIAN MEDOC (FR); Saint-Gerard, Alain, 33290, BLANQUEFORT (FR)
(74) Mandataire: Hirsch & Associés

(56) Documents cités:
- EP-A- 1 256 996
- FR-A- 2 468 213
- US-A1- 2003 232 243
- US-A1- 2005 238 953

## Description

La présente invention se rapporte à un accumulateur, et plus spécifiquement à une connexion électrique d'un accumulateur. L'invention concerne également un procédé de fabrication d'un tel accumulateur.

Un générateur électrochimique ou accumulateur (ces deux termes étant équivalents, on utilisera le terme d'accumulateur dans la présente description) est un dispositif de production d'électricité dans lequel de l'énergie chimique est convertie en énergie électrique. L'énergie chimique est constituée par des composés électrochimiquement actifs déposés sur au moins une face d'électrodes disposées dans l'accumulateur. L'énergie électrique est produite par des réactions électrochimiques sur ces électrodes au cours d'une décharge de l'accumulateur.

Pour permettre ces réactions électrochimiques, les électrodes sont disposées en un faisceau électrochimique comportant une alternance d'électrodes positives et négatives isolées entre elles par des séparateurs imprégnés d'électrolyte.

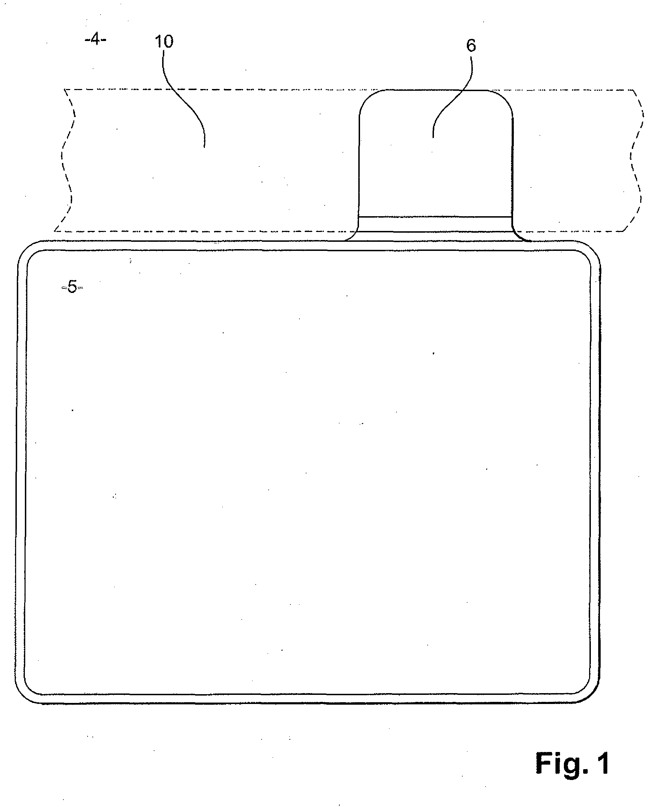

La figure 1 présente une électrode typique d'un accumulateur de type NiCd, NiMH, ou NiZn. L'électrode 4 comprend une plaque 5 et une tête de plaque 6. La plaque 5 peut-être en acier nickelé. Elle est couverte d'une matière électrochimiquement active. La tête de plaque 6, également en acier nickelé, permet de connecter l'électrode 4 à une borne de sortie de courant de l'accumulateur. La tête de plaque 6 peut être obtenue à partir de la découpe d'un feuillard 10 fixé à un bord de la plaque 5.

Typiquement, un faisceau électrochimique est formé en empilant les électrodes les unes sur les autres de façon que la polarité soit alternativement positive et négative ; les électrodes étant isolées entre elles par un séparateur. Les électrodes sont également empilées de sorte que les têtes de plaque des électrodes de polarité positive sont superposées d'une part, et les têtes de plaque des électrodes de polarité négative sont superposées d'autre part ; les deux ensembles de têtes de plaque se faisant face sur un côté de l'empilement d'électrodes. Ensuite, au cours d'une opération dite de foisonnement, les électrodes de même polarité sont mises en contact au niveau de leurs têtes de plaque, formant ainsi deux ensembles d'électrodes de polarité opposée.

Les ensembles d'électrodes positives et négatives sont connectés à des bornes de sortie de courant afin de collecter l'énergie électrique du faisceau, et la transporter vers un consommateur électrique. Sur chaque ensemble d'électrodes une borne est vissée ou soudée au niveau des têtes de plaque.

La fixation d'une borne à un ensemble de têtes de plaque par vissage a principalement deux inconvénients. D'abord, il est nécessaire d'obtenir un parfait alignement des têtes de plaque des électrodes, afin d'insérer convenablement toute la visserie dans la borne. D'autre part, une résistance ohmique importante est obtenue.

La fixation d'une borne par soudure aux têtes de plaque permet d'obtenir une meilleure résistance électrique. Cependant, au cours de l'opération de soudage, il est nécessaire de contenir le matériau en fusion afin d'éviter toute projection de matière dans le faisceau électrochimique pouvant provoquer court-circuit ou brûlure du faisceau. Ceci peut-être obtenu par l'ajout d'une pièce intermédiaire sur les têtes de plaque, ou par des usinages complexes réalisés dans la borne de sortie de courant. Par exemple, dans les documents FR-A-2 752 090 et FR-A-2 748 606, une fente est définie dans la borne de sortie de courant afin de recevoir les têtes de plaques rassemblées lors de l'opération de foisonnement. Les parois de la fente de la borne de sortie de courant confinent le matériau en fusion et évitent sa fuite hors de la zone de soudage. Mais la nécessité d'ajouter une pièce ou d'usiner la borne de sortie de courant complique l'assemblage par soudage des bornes de sortie de courant sur les têtes de plaque.

US 2003/0232243 et EP 1256996 décrivent une méthode de fabrication d'une connexion électrique dans une batterie où les têtes de plaques sont repliées sur elle-mêmes.

Il existe donc un besoin pour un procédé simplifié de soudage des têtes de plaque sur une borne de sortie de courant d'un accumulateur, permettant un confinement de la soudure afin d'éviter le court-circuit ou la brûlure du faisceau électrochimique.

A cet effet, l'invention propose un accumulateur comprenant :
- un conteneur contenant un faisceau électrochimique constitué d'une alternance d'électrodes positives et d'électrodes négatives séparées par des séparateurs, chaque électrode présentant une plaque et une tête de plaque ;
- une borne de sortie de courant positive et une borne de sortie de courant négative,
   dans lequel un empilement de têtes de plaque positives présente au moins une portion d'empilement repliée sur elle-même, l'empilement de têtes de plaque étant soudé à la borne de sortie de courant positive du côté opposé à ladite portion repliée, et dans lequel un empilement de têtes de plaque négatives présente au moins une portion d'empilement repliée sur elle-même, l'empilement de têtes de plaque étant soudé à la borne de sortie de courant négative du côté opposé à ladite portion repliée.

Selon les modes de réalisation, l'accumulateur selon l'invention peut comprendre deux empilements de têtes de plaque positives soudés de part et d'autre de la borne de sortie de courant positive et/ou deux empilements de têtes de plaque négatives soudés de part et d'autre de la borne de sortie de courant négative.

Selon les modes de réalisation, la tête de plaque de chaque électrode est fixée à un bord de la plaque de l'électrode, et la pliure de la portion de l'empilement peut être selon un axe parallèle ou perpendiculaire aux bords des plaques auxquels sont fixées les têtes de plaque.

Selon un mode de réalisation, la soudure d'un empilement de têtes de plaque à une borne forme une goutte de soudure qui englobe au moins une partie de la borne et toutes les têtes de plaque de l'empilement, la portion repliée de l'empilement n'étant pas totalement incluse dans ladite goutte de soudure.

Selon les applications, l'accumulateur peut-être de type Nickel-Cadmium (NiCd), Nickel- Metal Hydrure (NiMH), ou Nickel-Zinc (NiZn).

L'invention concerne en outre un procédé de fabrication d'un accumulateur, comprenant les étapes consistant à :
- fournir un faisceau électrochimique comprenant une alternance d'électrodes positives et d'électrodes négatives séparées par des séparateurs, chaque électrode présentant une plaque et une tête de plaque;
- replier une portion d'un empilement de têtes de plaque positives sur elle-même et replier une portion d'un empilement de têtes de plaque négatives sur elle-même ;
- souder chaque empilement de têtes de plaque à une borne de sortie de courant respective, avec la portion repliée du côté opposé à la borne, en positionnant une électrode de soudage sur la portion repliée.

Selon les modes de réalisation, le procédé de fabrication selon l'invention peut comprendre une ou plusieurs des caractéristiques suivantes :
- la tête de plaque de chaque électrode est fixée à un bord de la plaque de l'électrode, et la pliure de la portion est réalisée selon un axe parallèle aux bords des plaques auxquels sont fixés les têtes de plaque ;
- le procédé comprend en outre une étape consistant à découper chaque tête de plaque de manière à former une languette constituant la portion à replier ;
- la tête de plaque de chaque électrode est fixée à un bord de la plaque de l'électrode, et la pliure de la portion est réalisée selon un axe perpendiculaire aux bords des plaques auxquels sont fixées les têtes de plaque.
- la portion d'empilement de têtes de plaque est repliée sur elle-même autour d'un axe ;
- chaque soudure est réalisée directement sur la borne sans pièce additionnelle ;
- chaque soudure est réalisée directement sur une périphérie de la borne ;
- la procédé comprend en outre une étape consistant à placer le faisceau électrochimique dans un conteneur et une étape consistant à remplir le conteneur d'électrolyte.

D'autres caractéristiques et avantages de l'invention apparaîtront à la lecture de la description qui suit, donnée à titre d'exemple, et en référence aux figures suivantes:
- La figure 1, déjà décrite, représente une électrode de l'art antérieur ;
- La figure 2 illustre un empilement d'électrodes selon un premier mode de réalisation de l'invention ;
- La figure 3 illustre l'empilement de la figure 2 soudé à une borne de sortie de courant ;
- La figure 4 illustre une électrode présentant une tête de plaque selon un deuxième mode de réalisation de l'invention ;
- La figure 5 illustre un empilement d'électrodes selon le deuxième mode de réalisation de l'invention ;
- La figure 6 illustre l'empilement de la figure 5 soudé à une borne de sortie de courant.
- La figure 7 illustre un faisceau électrochimique selon un premier mode de réalisation de l'invention soudé à des bornes de sortie de courant.

L'invention concerne un accumulateur dans lequel des têtes de plaque d'électrodes sont soudées aux bornes de sortie de courant de l'accumulateur. Selon l'invention, les têtes de plaque sont empilées, et une portion d'empilement est repliée sur elle-même. La connexion électrique des électrodes à une borne de sortie de courant est réalisée par une soudure de la borne derrière la portion d'empilement repliée. La portion d'empilement repliée sert ainsi de retenue du matériau en fusion lors du soudage.

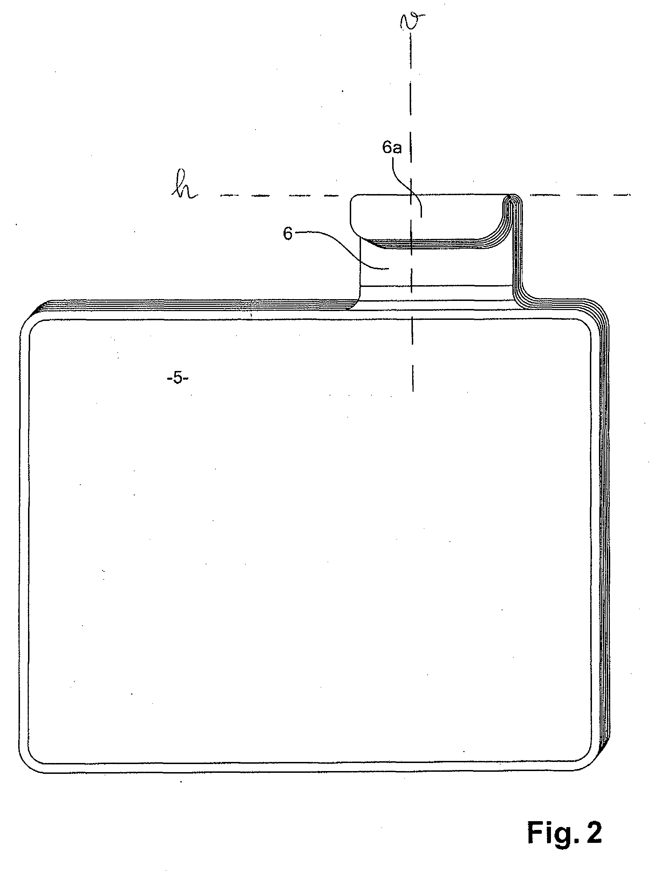

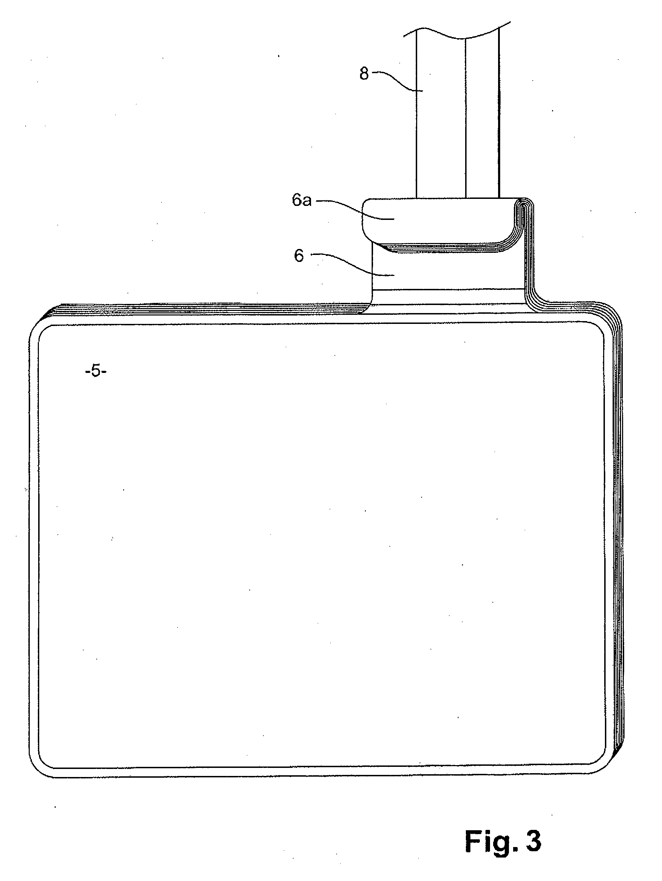

Les figures 2 et 3 illustrent un premier mode de réalisation de l'invention.

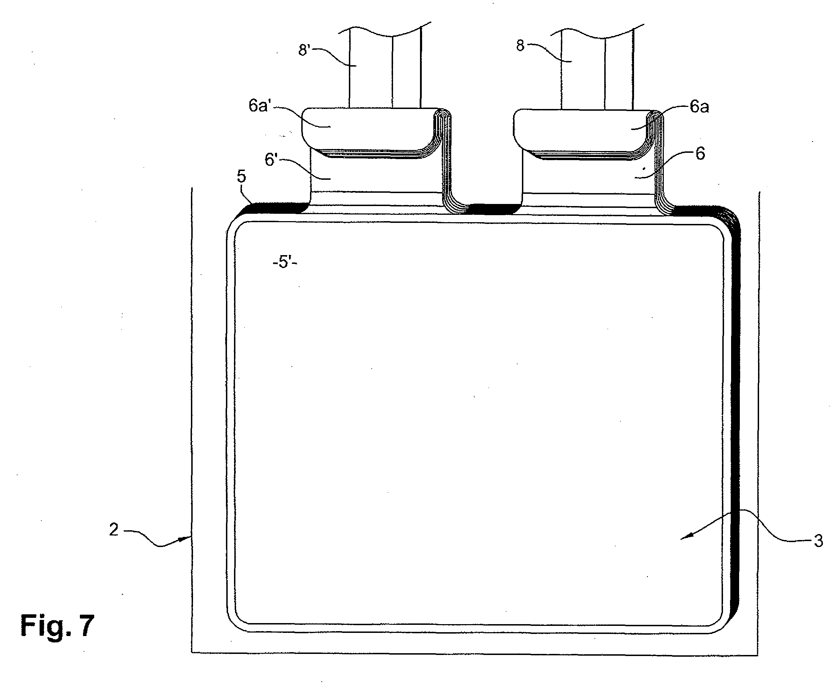

La figure 2 illustre un empilement d'électrodes selon un premier mode de réalisation de l'invention. Dans un accumulateur, l'empilement d'électrodes présenté en figure 2 est monté, de manière connue en soit, en alternance avec un empilement d'électrodes de polarité opposée, comme cela sera décrit en référence à la figure 7. Pour des raisons de clarté un seul empilement d'électrodes est représenté. Chaque électrode comprend une plaque 5, et une tête de plaque 6 fixée à un bord de la plaque 5. Les électrodes forment un empilement tel que les têtes de plaque 6 sont superposées et forment un empilement. Dans ce premier mode de réalisation une portion 6a de l'empilement de têtes de plaque 6 est repliée sur elle-même selon un axe h parallèle aux bords des plaques 5 auxquels sont fixées les têtes de plaque 6.

La figure 3 montre un ensemble d'électrodes selon le premier mode de réalisation associé à une borne de sortie de courant 8. L'empilement de têtes de plaque 6 est soudé sur la borne de sortie de courant 8 par l'intermédiaire du côté opposé à ladite portion 6a repliée. Ainsi, l'empilement des têtes de plaque 6 présente une première face sur laquelle une portion 6a est repliée selon une pliure h parallèle aux bords des plaques 5 auxquels sont fixées les têtes de plaque 6, et une seconde face, opposée à la première, qui est soudée à la borne de sortie de courant 8.

Lors du soudage de l'empilement de têtes de plaque 6 à la borne de sortie de courant 8, le matériau de toutes les têtes de plaque empilées fusionne, alors que la portion 6a repliée retient le matériau en fusion, comme cela sera décrit plus en détail plus loin.

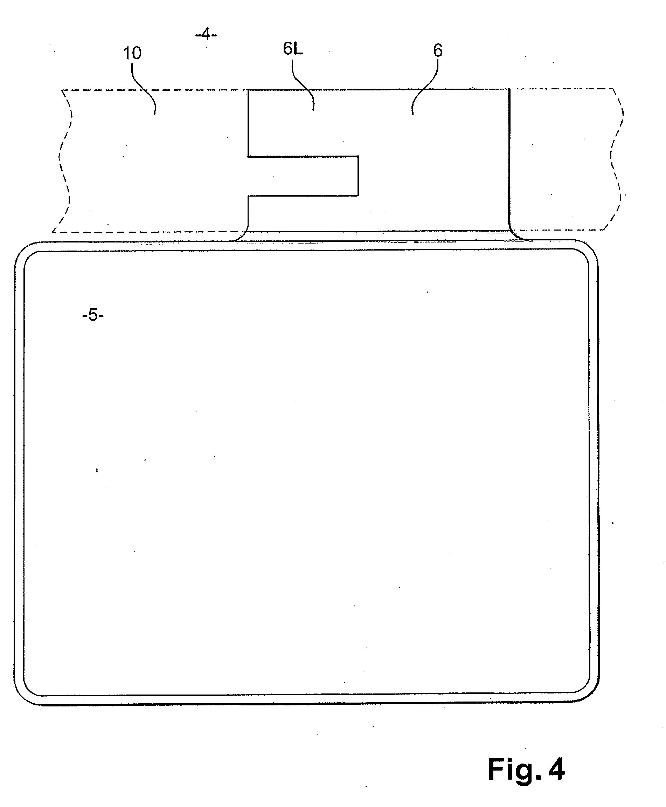

Les figures 4 à 6 présentent un deuxième mode de réalisation de l'invention.

La figure 4 présente une électrode 4 utilisée dans le deuxième mode de réalisation. La tête de plaque 6 est fixée à un bord de la plaque 5. L'électrode 4 présente une languette 6L formée dans la tête de plaque 6. Le procédé de formation de la languette 6L sera explicité plus en détail plus loin.

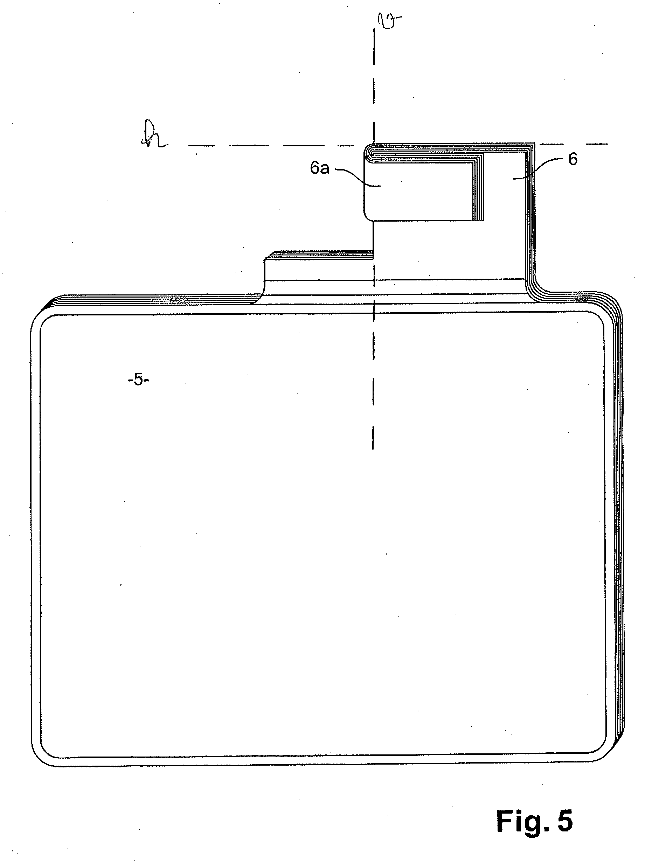

La figure 5 illustre un empilement d'électrodes selon un deuxième mode de réalisation de l'invention. Dans ce mode de réalisation, les languettes 6L des têtes de plaque 6, décrites en référence à la figure 4, forment la portion 6a qui est repliée selon un axe v perpendiculaire aux bords des plaques 5 auxquels sont fixés les têtes de plaque 6.

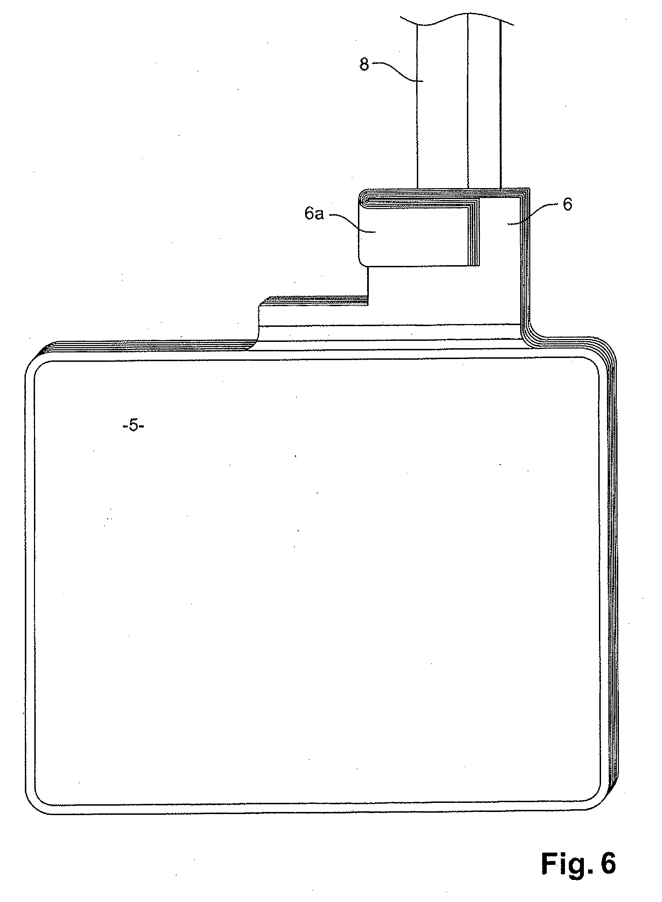

La figure 6 montre un ensemble d'électrodes selon le deuxième mode de réalisation associé à une borne de sortie de courant 8. L'empilement de têtes de plaque 6 est soudé sur la borne de sortie de courant 8 par l'intermédiaire du côté opposé à ladite portion 6a repliée. Ainsi, l'empilement des têtes de plaque 6 présente une première face sur laquelle une portion 6a est repliée selon une pliure v perpendiculaire aux bords des plaques 5 auxquels sont fixées les têtes de plaque 6, et une seconde face, opposée à la première, qui est soudée à la borne de sortie de courant 8.

La soudure d'un empilement de têtes de plaque 6 à sa borne de sortie de courant 8 prend la forme d'une goutte de soudure qui englobe au moins une partie de la borne 8 et toutes les têtes de plaque 6 de l'empilement, la portion 6a repliée de l'empilement retenant ladite goutte de soudure. Ainsi, toutes les électrodes sont électriquement connectées à la borne de sortie de courant 8. La goutte de soudure s'étend sur sensiblement toute l'épaisseur de l'empilement de têtes de plaque 6 située sous la portion 6a repliée. Une partie des épaisseurs de têtes de plaque 6 constituant la portion 6a repliée peut également être comprise dans la goutte de soudure. Cependant la portion 6a repliée n'a pas principalement une fonctionnalité électrique, mais une fonctionnalité mécanique qui consiste à confiner la goutte de soudure pour éviter une fuite de matériau vers le faisceau électrochimique.

L'accumulateur selon l'invention présente des têtes de plaque 6 dont la soudure avec une borne de sortie de courant 8 a été obtenue de façon sécurisée et efficace, sans amener de matériau supplémentaire, et sans un usinage dédié de la borne de sortie de courant 8.

Comme cela a été mentionné plus haut, dans un accumulateur, les empilements d'électrodes présentés en figures 2 et 3, et en figures 5 et 6 sont respectivement montés de manière connue en soi au sein d'un faisceau électrochimique.

La figure 7 illustre schématiquement un faisceau électrochimique 3 d'un accumulateur selon le premier mode de réalisation de l'invention placé dans un conteneur 2. Le faisceau électrochimique 3 est constitué d'un empilement d'électrodes alternativement positives et négatives dans la direction de l'empilement, les plaques 5, 5' d'électrode étant isolées entre elles par un séparateur non représenté. Les électrodes forment un empilement tel que les têtes de plaque 6 des électrodes de polarité positive sont superposées d'une part, et les têtes de plaque 6' des électrodes de polarité négative sont superposées d'autre part ; les deux ensembles de têtes de plaque se faisant face sur un côté du faisceau 3.

Les têtes de plaque 6 positives forment un premier empilement de têtes de plaque et les têtes de plaque 6' négatives forment un second empilement de têtes de plaque. Les descriptions précédentes d'un empilement de tête de plaque 6 et de la soudure de l'empilement de têtes de plaque 6 à une borne de sortie de courant 8 sont valables pour chacun des deux empilements de têtes de plaque 6, 6' positives et négatives soudés respectivement à une borne de sortie de courant 8 positive et une borne de sortie de courant 8' négative.

Dans un mode de réalisation non illustré, l'accumulateur peut comprendre deux empilements de têtes de plaque 6 positives soudés de part et d'autre de la borne de sortie de courant 8 positive. De même, l'accumulateur peut comprendre deux empilements de têtes de plaque 6' négatives soudés de part et d'autre de la borne de sortie de courant 8' négative. Un tel mode de réalisation peut être mis en oeuvre lorsque le nombre de têtes de plaque est important. L'épaisseur de l'empilement de têtes de plaque est alors telle qu'il devient difficile, voir impossible de réaliser la pliure, que ce soit selon un axe h parallèle ou un axe v perpendiculaire aux bords des plaques 5. On peut alors séparer l'empilement de têtes de plaque en deux sous groupe d'empilement pour une même polarité. Chacun des empilements de têtes de plaque 6, 6' positives ou négatives présente les caractéristiques décrites précédemment. Ainsi, selon ce mode réalisation, la borne de sortie de courant 8, 8' positive ou négative sera positionnée entre deux empilements de têtes de plaque 6, 6', et soudée à ces deux empilements de têtes de plaque 6, 6' par l'intermédiaire des côtés opposés aux portions 6a, 6a' repliées.

L'invention concerne également un procédé de fabrication d'un accumulateur dans lequel l'opération de soudage des têtes de plaque 6, 6' à une borne de sortie de courant 8, 8' est réalisée sans fuite du matériau en fusion, et sans pièce additionnelle ou usinage de la borne.

Le procédé selon l'invention comprend les étapes de fourniture d'un faisceau électrochimique 3, de pliage d'une portion 6a, 6a' d'un empilement de têtes de plaque 6, 6', et d'assemblage et de soudage des têtes de plaque 6, 6' sur les bornes de sortie de courant 8, 8'.

Une fois que le faisceau électrochimique 3 est constitué par superposition des plaques 5, 5' positives et négatives séparées par des séparateurs, les têtes de plaque 6, 6' subissent une opération de foisonnement et de pliage.

Au cours de ladite opération de pliage, une portion 6a, 6a' de l'empilement de têtes de plaque 6, 6' est repliée sur elle-même. Autrement dit, la portion 6a, 6a' est repliée sur une face dudit empilement de têtes de plaque 6, 6'. Il peut-être difficile de plier directement la portion 6a, 6a' du fait de l'épaisseur cumulée des têtes de plaque 6, 6' dans l'empilement de têtes de plaque 6, 6'. Cette opération de pliage peut alors être assistée d'un axe ou pièce cylindrique positionné au niveau de la base de la portion 6a, 6a'.

Dans un premier mode de réalisation présenté en figures 2 et 3, la portion 6a, 6a' est repliée selon un axe h parallèle aux bords des plaques 5. Dans un deuxième mode de réalisation présenté en figures 5 et 6, la portion 6a, 6a' est repliée selon un axe v perpendiculaire aux bords des plaques 5.

Lors de la fabrication des électrodes pour le deuxième mode de réalisation (figures 4 à 6), les têtes de plaque 6 doivent être découpées de manière adéquate. La figure 4 illustre une électrode 4 utilisée pour le procédé selon le deuxième mode de réalisation. L'électrode 4 présente une languette 6L qui est définie par une découpe dans la tête de plaque 6 suivant une direction parallèle au bord de la plaque 5 auquel est fixé la tête de plaque 6. Cette découpe est réalisée dans le feuillard qui permet de constituer la tête de plaque 6, par exemple par estampillage à l'aide d'un poinçon adapté. Après la constitution du faisceau 3, les têtes de plaque 6 sont foisonnées et les languettes 6L forment un empilement qui constitue la portion 6a qui pourra être repliée selon un axe v perpendiculaire aux bords des plaques 5.

Dans l'opération d'assemblage et de soudage, l'empilement de têtes de plaque 6, 6' est d'abord positionné sur la borne de sortie de courant 8, 8' de la polarité correspondante, avec la portion 6a, 6a' repliée du côté opposé à la borne. Le soudage peut alors être réalisé, par exemple dans une soudeuse à résistance : une première électrode de soudage est positionnée sur la portion 6a, 6a' repliée de l'empilement de têtes de plaque 6, 6' et une deuxième électrode de soudage est positionnée, soit sur la borne 8, 8' si un seul empilement de têtes de plaque est à souder à la borne, soit sur la portion 6a, 6a' repliée d'un deuxième empilement de têtes de plaque 6, 6' à souder à la borne 8, 8'. Une pression et un passage de courant électrique est appliqué entre les électrodes de soudage provoquant la fusion des matériaux ; il y a alors un risque de fuite de la matière en fusion sous l'effet de la pression exercée.

Or la portion 6a, 6a' repliée va confiner la soudure, et permettre d'éviter la fuite du matériau en fusion. Ladite portion 6a, 6a' repliée fournit de la matière afin de contenir la soudure. Ainsi, il n'est pas nécessaire d'amener de la matière supplémentaire, ni de réaliser un usinage complexe de la borne de sortie de courant 8, 8'. La portion 6a, 6a' repliée confine le métal en fusion lors du soudage, permettant ainsi d'éliminer tout risque de brûlure ou de court-circuit du faisceau électrochimique 3. La portion 6a, 6a' repliée de l'empilement de têtes de plaque 6, 6' réalise donc un maintien mécanique de la soudure et n'a pas de fonction électrique.

Pour qu'une borne de sortie de courant 8, 8' soit bien soudée à un empilement de têtes de plaque 6, 6', il faut que l'ensemble des têtes de plaque 6, 6' de l'empilement soit pris dans la soudure. Des tests ont été réalisés avec un empilement de neuf têtes de plaque 6. Ces tests montrent que la goutte de soudure comprend toutes les têtes de plaque 6 de l'empilement, ainsi que quelques unes des épaisseurs de la portion 6a repliée. Par conséquent, en soudant toute l'épaisseur de chaque empilement de têtes de plaque, toutes les électrodes utiles à la collecte du courant dans le faisceau électrochimique 3 sont efficacement connectées à leurs bornes de sortie de courant respectives. Cependant l'inclusion d'épaisseurs de la portion repliée dans la goutte de soudure n'est pas un impératif, car la portion repliée a avant tout une utilité mécanique pour le confinement de la soudure et n'a aucune fonction électrique.

Le faisceau électrochimique 3 associé à ses bornes de sortie de courant 8, 8' peut ensuite être placé dans un conteneur 2 qui est rempli d'électrolyte pour imprégner les séparateurs.

L'accumulateur selon l'invention peut être de type NiCd, NiMH, ou NiZn, et le procédé selon l'invention est particulièrement adapté à la fabrication d'accumulateurs de type NiCd, NiMH, ou NiZn.

## Revendications

1. Accumulateur comprenant :
- un conteneur (2) contenant un faisceau électrochimique (3) constitué d'une alternance d'électrodes positives et d'électrodes négatives séparées par des séparateurs, chaque électrode (4) présentant une plaque (5, 5') et une tête de plaque (6,6') ;
- une borne de sortie de courant (8) positive et une borne de sortie de courant (8') négative,
dans lequel un empilement de têtes de plaque (6) positives présente au moins une portion (6a) d'empilement repliée sur elle-même, l'empilement de têtes de plaque étant soudé à la borne de sortie de courant (8) positive du côté opposé à ladite portion repliée,
et dans lequel un empilement de têtes de plaque (6') négatives présente au moins une portion (6a') d'empilement repliée sur elle-même, l'empilement de têtes de plaque étant soudé à la borne de sortie de courant (8') négative du côté opposé à ladite portion repliée.

2. Accumulateur selon la revendication 1, comprenant deux empilements de têtes de plaque (6) positives soudés de part et d'autre de la borne de sortie de courant (8) positive.

3. Accumulateur selon la revendication 1 ou 2, comprenant deux empilements de têtes de plaque (6') négatives soudés de part et d'autre de la borne de sortie de courant (8') négative.

4. Accumulateur selon l'une des revendications 1 à 3, dans lequel la tête de plaque (6, 6') de chaque électrode (4) est fixée à un bord de la plaque (5, 5') de l'électrode (4), et la pliure de la portion (6a, 6a') de l'empilement est selon un axe (h) parallèle aux bords des plaques (5, 5') auxquels sont fixées les têtes de plaque (6, 6').

5. Accumulateur selon l'une des revendications 1 à 3, dans lequel la tête de plaque (6, 6') de chaque électrode (4) est fixée à un bord de la plaque (5, 5') de l'électrode (4), et la pliure de la portion (6a, 6a') de l'empilement est selon un axe (v) perpendiculaire aux bords des plaques (5, 5') auxquels sont fixées les têtes de plaque (6, 6').

6. Accumulateur selon l'une des revendications précédentes, dans lequel la soudure d'un empilement de têtes de plaque (6, 6') à une borne (8, 8') forme une goutte de soudure qui englobe au moins une partie de la borne (8, 8') et toutes les têtes de plaque (6, 6') de l'empilement, la portion repliée (6a, 6a') de l'empilement n'étant pas totalement incluse dans ladite goutte de soudure.

7. Accumulateur selon l'une des revendications précédentes, de type Nickel-Cadmium (NiCd), Nickel- Metal Hydrure (NiMH), ou Nickel-Zinc (NiZn).

8. Procédé de fabrication d'un accumulateur, comprenant les étapes consistant à :
- fournir un faisceau électrochimique (3) comprenant une alternance d'électrodes positives et d'électrodes négatives séparées par des séparateurs, chaque électrode (4) présentant une plaque (5, 5') et une tête de plaque (6, 6') ;
- replier une portion (6a) d'un empilement de têtes de plaque (6) positives sur elle-même et replier une portion (6a') d'un empilement de têtes de plaque (6') négatives sur elle-même ;
- souder chaque empilement de têtes de plaque (6, 6') à une borne de sortie de courant (8, 8') respective, avec la portion (6a, 6a') repliée du côté opposé à la borne (8, 8'), en positionnant une électrode de soudage sur la portion (6a, 6a') repliée.

9. Procédé de fabrication d'un accumulateur selon la revendication 8, dans lequel la tête de plaque (6, 6') de chaque électrode (4) est fixée à un bord de la plaque (5, 5') de l'électrode (4), et la pliure de la portion (6a, 6a') est réalisée selon un axe (h) parallèle aux bords des plaques (5, 5') auxquels sont fixées les têtes de plaque (6, 6').

10. Procédé de fabrication d'un accumulateur selon la revendication 8, comprenant en outre une étape consistant à découper chaque tête de plaque (6, 6') de manière à former une languette (6L, 6L') constituant la portion (6a, 6a') à replier.

11. Procédé de fabrication d'un accumulateur selon la revendication 10, dans lequel la tête de plaque (6, 6') de chaque électrode (4) est fixée à un bord de la plaque (5, 5') de l'électrode (4), et la pliure de la portion (6a, 6a') est réalisée selon un axe (v) perpendiculaire aux bords des plaques (5, 5') auxquels sont fixées les têtes de plaque (6,6').

12. Procédé de fabrication d'un accumulateur selon l'une des revendications 8 à 11, dans lequel la portion (6a, 6a') d'empilement de têtes de plaque (6, 6') est repliée sur elle-même autour d'un axe.

13. Procédé de fabrication d'un accumulateur selon l'une des revendications 8 à 12, dans lequel chaque soudure est réalisée directement sur la borne (8, 8') sans pièce additionnelle.

14. Procédé de fabrication d'un accumulateur selon l'une des revendications 8 à 13, dans lequel chaque soudure est réalisée directement sur une périphérie de la borne (8, 8').

15. Procédé de fabrication d'un accumulateur selon l'une des revendications 8 à 14, comprenant en outre une étape consistant à placer le faisceau électrochimique (3) dans un conteneur (2) et une étape consistant à remplir le conteneur d'électrolyte.

## Patentansprüche

1. Akkumulator, welcher umfasst:
- einen Behälter (2), der ein elektrochemisches Bündel (3) enthält, das aus einer Reihe abwechselnd angeordneter positiver Elektroden und negativer Elektroden besteht, die durch Separatoren getrennt sind, wobei jede Elektrode (4) eine Platte (5, 5') und einen Plattenkopf (6, 6') aufweist;
- eine positive Stromausgangsklemme (8) und eine negative Stromausgangsklemme (8'),
wobei ein Stapel von positiven Plattenköpfen (6) mindestens einen auf sich selbst zurückgebogenen Stapelabschnitt (6a) aufweist, wobei der Stapel von Plattenköpfen auf der diesem zurückgebogenen Abschnitt gegenüberliegenden Seite an die positive Stromausgangsklemme (8) angeschweißt ist,
und wobei ein Stapel von negativen Plattenköpfen (6') mindestens einen auf sich selbst zurückgebogenen Stapelabschnitt (6a') aufweist, wobei der Stapel von Plattenköpfen auf der diesem zurückgebogenen Abschnitt gegenüberliegenden Seite an die negative Stromausgangsklemme (8') angeschweißt ist.

2. Akkumulator nach Anspruch 1, welcher zwei Stapel von positiven Plattenköpfen (6) umfasst, die beiderseits der positiven Stromausgangsklemme (8) angeschweißt sind.

3. Akkumulator nach Anspruch 1 oder 2, welcher zwei Stapel von negativen Plattenköpfen (6') umfasst, die beiderseits der negativen Stromausgangsklemme (8') angeschweißt sind.

4. Akkumulator nach einem der Ansprüche 1 bis 3, wobei der Plattenkopf (6, 6') jeder Elektrode (4) an einem Rand der Platte (5, 5') der Elektrode (4) befestigt ist und das Umbiegen des Abschnitts (6, 6a') des Stapels entlang einer Achse (h) erfolgt, die zu den Rändern der Platten (5, 5'), an denen die Plattenköpfe (6, 6') befestigt sind, parallel ist.

5. Akkumulator nach einem der Ansprüche 1 bis 3, wobei der Plattenkopf (6, 6') jeder Elektrode (4) an einem Rand der Platte (5, 5') der Elektrode (4) befestigt ist und das Umbiegen des Abschnitts (6, 6a') des Stapels entlang einer Achse (v) erfolgt, die zu den Rändern der Platten (5, 5'), an denen die Plattenköpfe (6, 6') befestigt sind, senkrecht ist.

6. Akkumulator nach einem der vorhergehenden Ansprüche, wobei die Schweißverbindung eines Stapels von Plattenköpfen (6, 6') mit einer Klemme (8, 8') einen Schweißtropfen bildet, welcher mindestens einen Teil der Klemme (8, 8') und alle Plattenköpfe (6, 6') des Stapels einschließt, wobei der zurückgebogene Abschnitt (6a, 6a') des Stapels nicht vollständig in diesem Schweißtropfen eingeschlossen ist.

7. Akkumulator nach einem der vorhergehenden Ansprüche vom Typ Nickel-Cadmium (NiCd), Nickel-Metallhydrid (NiMH) oder Nickel-Zink (NiZn).

8. Verfahren zur Herstellung eines Akkumulators, welches die folgenden Schritte umfasst:
- Bereitstellen eines elektrochemischen Bündels (3), das eine Reihe abwechselnd angeordneter positiver Elektroden und negativer Elektroden umfasst, die durch Separatoren getrennt sind, wobei jede Elektrode (4) eine Platte (5, 5') und einen Plattenkopf (6, 6') aufweist;
- Zurückbiegen eines Abschnitts (6a) eines Stapels von positiven Plattenköpfen (6) auf sich selbst und Zurückbiegen eines Abschnitts (6a') eines Stapels von negativen Plattenköpfen (6') auf sich selbst;
- Anschweißen jedes Stapels von Plattenköpfen (6, 6') an eine jeweilige Stromausgangsklemme (8, 8'), wobei sich der zurückgebogene Abschnitt (6a, 6a') auf der der Klemme (8, 8') gegenüberliegenden Seite befindet, durch Positionieren einer Schweißelektrode auf dem zurückgebogenen Abschnitt (6a, 6a').

9. Verfahren zur Herstellung eines Akkumulators nach Anspruch 8, wobei der Plattenkopf (6, 6') jeder Elektrode (4) an einem Rand der Platte (5, 5') der Elektrode (4) befestigt wird und das Umbiegen des Abschnitts (6, 6a') entlang einer Achse (h) durchgeführt wird, die zu den Rändern der Platten (5, 5'), an denen die Plattenköpfe (6, 6') befestigt sind, parallel ist.

10. Verfahren zur Herstellung eines Akkumulators nach Anspruch 8, welches außerdem einen Schritt umfasst, der darin besteht, jeden Plattenkopf (6, 6') derart zuzuschneiden, dass eine Zunge (6L, 6L') gebildet wird, die den zurückzubiegenden Abschnitt (6a, 6a') darstellt.

11. Verfahren zur Herstellung eines Akkumulators nach Anspruch 10, wobei der Plattenkopf (6, 6') jeder Elektrode (4) an einem Rand der Platte (5, 5') der Elektrode (4) befestigt wird und das Umbiegen des Abschnitts (6, 6a') entlang einer Achse (v) durchgeführt wird, die zu den Rändern der Platten (5, 5'), an denen die Plattenköpfe (6, 6') befestigt sind, senkrecht ist.

12. Verfahren zur Herstellung eines Akkumulators nach einem der Ansprüche 8 bis 11, wobei der Abschnitt (6a, 6a') eines Stapels von Plattenköpfen (6, 6') um eine Achse auf sich selbst zurückgebogen wird.

13. Verfahren zur Herstellung eines Akkumulators nach einem der Ansprüche 8 bis 12, wobei jede Schweißung direkt an der Klemme (8, 8') ohne ein zusätzliches Teil durchgeführt wird.

14. Verfahren zur Herstellung eines Akkumulators nach einem der Ansprüche 8 bis 13, wobei jede Schweißung direkt an einem Umfang der Klemme (8, 8') durchgeführt wird.

15. Verfahren zur Herstellung eines Akkumulators nach einem der Ansprüche 8 bis 14, welches außerdem einen Schritt, der darin besteht, das elektrochemische Bündel (3) in einem Behälter (2) anzuordnen, und einen Schritt, der darin besteht, den Behälter mit Elektrolyt zu füllen, umfasst.

## Claims

1. A secondary cell comprising:
- a container (2) containing an electrode plate group (3) made up by alternating positive electrodes and negative electrodes separated by separators, each electrode (4) having a plate (5, 5') and a plate lug (6, 6');
- a positive current output terminal (8) and a negative current output terminal (8'),
in which a stack of positive plate lugs (6) has at least one stack portion (6a) folded back on itself, the stack of plate lugs being welded to the positive current output terminal (8) at the opposite side to said folded-over portion,
and in which a stack of negative plate lugs (6') has at least one stack portion (6a') folded back on itself, the stack of plate lugs being welded to the negative current output terminal (8') at an opposite side to said folded-over portion.

2. The secondary cell according to claim 1, comprising two stacks of positive plate lugs (6) welded at each side of the positive current output terminal (8).

3. The secondary cell according to claim 1 or 2, comprising two stacks of negative plate lugs (6') welded at each side of the negative current output terminal (8').

4. The secondary cell according to one of claims 1 to 3, wherein in each electrode (4) the plate lug (6, 6') is added to a boundary of the plate (5, 5'), and the fold of the stack portion (6a, 6a') is along an axis (h) parallel to the boundaries of the plates (5, 5') to which the plates lugs (6, 6') are added.

5. The secondary cell according to one of claims 1 to 3, wherein in each electrode (4) the plate lug (6, 6') is added to a boundary of the plate (5, 5'), and the fold of the stack portion (6a, 6a') is along an axis (v) perpendicular to the boundaries of the plates (5, 5') to which the plates lugs (6, 6') are added.

6. The secondary cell according to one of the preceding claims, in which the weld of a stack of plate lugs (6, 6') to a terminal (8, 8') forms a weld zone which embraces at least one part of the terminal (8, 8') and all the plate lugs (6, 6') of the stack, the folded-over portion (6a, 6a') of the stack not being totally included within the weld zone.

7. The storage cell according to one of the preceding claims, of the Nickel-Cadmium (NiCd), Nickel-Metal Hydride (NiMH), or Nickel-Zinc (NiZn) type.

8. A method of producing a secondary cell, comprising the steps consisting of:
- supplying an electrode plate group (3) comprising alternating positive electrodes and negative electrodes separated by separators, each electrode (4) having a plate (5, 5') and a plate lug (6, 6');
- folding over a portion (6a) of a stack of positive plate lugs (6) back on itself and folding over a portion (6a') of a stack of negative plate lugs (6') back on itself;
- welding each stack of plate lugs (6, 6') to a respective current output terminal (8, 8'), with the folded-over portion (6a, 6a') at the opposite side to the terminal (8, 8'), by positioning a welding electrode on the folded-over portion (6a, 6a').

9. The method for producing a secondary cell according to claim 8, wherein in each electrode (4) the plate lug (6, 6') is added to a boundary of the plate (5, 5') of the electrode (4), and bending of the folded-over portion (6a, 6a') is performed about an axis (h) parallel to the boundaries of the plates (5, 5') to which the plate lugs (6, 6') are added.

10. The method for producing a secondary cell according to claim 8, further comprising a step consisting in cutting out each plate lug (6, 6') so as to form a small tongue (6L, 6L') constituting the portion (6a, 6a') to be folded over.

11. The method for producing a secondary cell according to claim 10, wherein in each electrode (4) the plate lug (6, 6') is added to a boundary of the plate (5, 5') of the electrode (4), and the fold of the portion to be folded over (6a, 6a') is made on an axis (v) perpendicular to the boundaries of the plates (5, 5') to which the plate lugs (6, 6') are added.

12. The method for producing a secondary cell according to one of claims 8 to 11, in which the said portion (6a, 6a') of the plate lug (6, 6') stack is folded back on itself about an axial rod.

13. The method for producing a storage cell according to one of claims 8 to 12, in which each weld is performed directly on the terminal (8, 8') with no additional part.

14. The method for producing a storage cell according to one of claims 8 to 13, in which each weld is performed directly on a periphery of the terminal (8, 8').

15. The method for producing a storage cell according to one of claims 8 to 14, further including a step consisting in placing the electrode plate group (3) in a container (2) and a step consisting in filling the container with electrolyte.
